# EUROPÄISCHE PATENTSCHRIFT

(11) **EP 1 161 731 B1**
(45) Veröffentlichungstag und Bekanntmachung des Hinweises auf die Patenterteilung: **11.06.2003**
(21) Anmeldenummer: 00916954.1
(22) Anmeldetag: 15.03.2000
(51) Int. Cl.: G06F 17/21

(54) **VERFAHREN, COMPUTERPROGRAMMPRODUKT UND SYSTEM ZUR ÜBERTRAGUNG VON COMPUTERDATEN AN EIN AUSGABEGERÄT**
METHOD, COMPUTER PROGRAMME PRODUCT AND SYSTEM FOR TRANSMITTING COMPUTER DATA TO AN OUTPUTTING DEVICE
PROCEDE, PRODUIT PROGRAMME D'ORDINATEUR ET SYSTEME PERMETTANT LE TRANSFERT DE DONNEES INFORMATIQUES A UN APPAREIL DE SORTIE

(30) Priorität: 15.03.1999 DE 19911461
(43) Veröffentlichungstag der Anmeldung: 12.12.2001
(73) Patentinhaber: Océ Printing Systems GmbH, 85586 Poing (DE)
(72) Erfinder: SCHWIER, Hartwig, D-81675 München (DE); GREBNER, Jürgen, D-96352 Wilhelmsthal (DE)
(74) Vertreter: Schaumburg, Thoenes & Thurn
(86) Internationale Anmeldenummer: EP0002310
(87) Internationale Veröffentlichungsnummer: WO00055760

(56) Entgegenhaltungen:
- EP-A- 0 814 425
- EP-A- 0 898 235

## Beschreibung

Die Erfindung betrifft ein Verfahren, ein Computerprogrammprodukt und ein System bzw. eine Vorrichtung zur Übertragung von Daten von einem Computersystem an ein Ausgabegerät, insbesondere von Druckdaten an ein Druckgerät.

An vielen Computersystemen ist ein Druckgerät angeschlossen. Je nach Systemumgebung haben sich dabei unterschiedliche Druckdatenformate etabliert. Beispielsweise sind in der Windows®-Umgebung die Druckdatenformate PCL und Postscript üblich. Bei diesen Druckdatenformaten werden die auszugebenden Daten (Dokumente) vollständig gepackt an den Drucker gesandt.

Im Gegensatz zu den soeben beschriebenen Formaten PCL und Postscript können bei anderen Druckdatenformaten wie AFPDS (Advanced Function Presentation Data Stream) oder IPDS (Intelligent Print Data Stream) Druckdaten in Ressourcen (Schriften, Formulare, Layouts usw.) und variable Daten getrennt werden. Die Ressourcen und die variablen Daten werden dabei in relativ späten Verarbeitungsschritten, d.h. erst kurz vor dem Drucken zusammengefügt. In der EP-A-0 131 966 ist ein entsprechendes Drucksystem beschrieben, das von einem Host Computer einen mehrere Dokumente enthaltenden Druckauftrag enthält, wobei Formulardaten und variable Daten eines Dokuments voneinander getrennt übertragen werden. Die Formulardaten sowie Daten, die in mehreren Dokumenten mehrfach vorkommen, werden nur einmal pro Druckauftrag übertragen, im Drucksystem gespeichert und zum Drucken mehrerer Einzeldokumente verwendet. Die variablen Daten weren dagegen pro Dokument einmal übertragen.

Computer in einer typischen Büroumgebung (Office-Bereich) sind häufig mit einem Windows®-Betriebssystem oder ähnlichem Betriebssystem wie Linux® und Macintosh® ausgestattet. Die Druckdatensprachen PCL und Postscript sind in diesem Office-Bereich, d.h. bei relativ niedrigen Druckleistungen bis etwa 40 Seiten pro Minute üblich. Dagegen sind im Hochleistungsdruckbereich oberhalb von 40 Seiten pro Minute die Datenströme AFPDS (Advanced Function Presentation Data Stream) und IPDS (Intelligent Printer Data Stream) üblich.

Spezifische Eigenschaften der Datenausgabe bei windowsähnlichen Betriebssystemen sowie ihrer Anwenderprogramme wie z.B. dem Programm Word für Windows®, den ihnen zugeordneten Drucksprachen wie PCL® oder Postscript®, werden insbesondere beim Ausdruck von Seriendokumenten, d.h. bei Nutzung der sogenannten mail-merge-function, deutlich. Solche Seriendokumente bestehen in der Regel aus Einzeldokumenten, die sich aus statischen, immer wiederkehrenden Daten (Vorlage, Master-Dokument) und veränderlichen/variablen Daten bestehen, die in die Vorlage bzw. in das Masterdokument eingesetzt werden. Bezogen auf das Gesamtdokument betragen die variablen Daten bei einem Seriendokument im allgemeinen nur einen Bruchteil der Datenmenge. Der statische Anteil bestimmt somit die notwendigen Leistungsparameter des Systems (RAM-Speicher, Plattenspeicher, Übertragungskapazität usw.) um zu einer performanten Druckgeschwindigkeit zu gelangen.

Relativ kleine Dokumente, d.h. individuelle Seiten, Berichte oder Bücher (bis etwa 300 Seiten) sind als gepackte Dokumente ohne weiteres zu drucken. Dagegen können Seriendokumente bei dieser Art zu Drucken zu erheblichen Zeitverzögerungen führen, weil die statischen Daten fortwährend, d.h. mit jedem Einzeldokument vom erzeugenden Computersystem an das Druckgerät übertragen werden müssen.

Ein weiteres Problem bei dieser Art zu drucken ist die Gestaltung von Dokumenten mit Zusatzinformationen, z.B. das Einbinden von Abbildungen oder das Hinterlegen von Formularen in die Dokumente. Diese Zusatzinformationen werden häufig nicht zusammen mit dem auszudruckenden Dokument erstellt, sondern stammen häufig aus einer anderen Datenquelle und sind mitunter aufwendig gestaltet, um für eine Vielzahl von Anwendungen verwendet werden zu können.

Beim Ausdruck von Dokumenten aus Anwenderprogrammen heraus, beispielsweise aus Word für Windows® heraus, werden diese Zusatzinformationen zuvor im allgemeinen über einen Editor (z.B. über das Word-Programm) in das Dokument eingefügt. Soll dieses Dokument mehrfach, insbesondere als Seriendokument ausgegeben werden, so besteht wiederum das Problem, daß die Zusatzinformation bei jedem Dokument zu verarbeiten ist, d.h. der Datenstrom mehrfach dieselbe Information und damit Redundanz enthält.

Dieselbe Problematik besteht, wenn einzelne Formulare, Banner-, Header- oder Trailer-Seiten über einen Windows-Druckertreiber dem Dokument beigefügt werden.

Aus der EP-A2-0814425 ist ein Verfahren und ein System bekannt, mit denen Dokumente zum Zwecke des Ausdrucks mit einem Hochgeschwindigkeits-Drucksystem produktionsangepaßt erzeugt und an ein Drucksystem übertragen werden. Dabei werden variable Daten mit statischen Daten, sogenannten Layouts, überlagert und die überlagerten Daten in einem für Hochgeschwindigkeitsdrucke angepaßten Format übertragen.

In der EP-A2-0898235 ist ein Verfahren zur Übertragung von einem Computersystem (Server) an ein Ausgabegerät (Client) beschrieben, bei dem ein Masterdokument mit einem variablen Datenbereich und mit einem statischen Datenbereich erzeugt wird. Diese sogenannte Ressource enthält statische und dynamische Anteile. Die statischen Anteile enthalten Elemente (TAGS), die angeben, wo im Dokument die dynamischen Anteile, die separat vom Server an den Client übertagen werden, einzusetzen sind.

Es ist Aufgabe der Erfindung, bei der Ausgabe von Dokumenten-daten von einem Computer an ein Ausgabegerät einen hohen Durchsatz an Dokumenten zu erreichen.

Diese Aufgabe wird durch die in den unabhängigen Ansprüchen angegebene Erfindung gelöst. Vorteilhafte Ausführungsformen der Erfindung sind Gegenstand der Unteransprüche.

Der Erfindung liegt die Erkenntnis zugrunde, daß bei der Ausgabe von Seriendokumenten aus Windows® oder Windows-ähnlichen Applikationen heraus ein Seriendatenstrom entsteht, bei dem statische und veränderliche Daten einzeldokumentenweise untrennbar miteinander verbunden sind. Durch die Erfindung wurde erkannt, daß eine Trennung dieser Daten in statische und variable Teile, selbst wenn diese Teile vorher bereits zusammengefügt (gepackt) waren, die Ausgabe auf einem Druckgerät oder einer anderen Ausgabeeinrichtung wesentlich effizienter und leistungsfähiger werden läßt.

Gemäß einem ersten Aspekt der Erfindung erfolgt während der Ausgabe der Daten eine Trennung von statischen und variablen Daten. Dabei werden beispielsweise die variablen Daten aus dem Seriendatenstrom gefiltert und anders weiterverarbeitet als die statischen Daten. Während die variablen Daten vollständig vom Computer an das Ausgabegerät übertragen werden, werden die statischen Daten, soweit sie sich wiederholen, nur einmalig vom Computer an das Ausgabegerät übertragen. Hierdurch kann die Datenmenge erheblich reduziert werden und somit die Leistungsfähigkeit der Übertragung wesentlich erhöht werden.

In einem System, bei dem variable und statische Daten zunächst für jedes Einzeldokument miteinander verbunden werden, erfolgt gemäß diesem ersten Aspekt der Erfindung in einem Zwischenschritt eine erneute, einzeldokumentenweise Trennung der variablen Daten von den statischen Daten, bevor die Daten an das Ausgabegerät, insbesondere an ein Druckgerät, übertragen werden. Um diese Trennung durchführen zu können, werden die variablen Daten zuvor mit einer geeigneten Markierung versehen, insbesondere farblich gekennzeichnet. Die Markierung erfolgt insbesondere bereits bei der Erstellung des Dokuments durch Markierung der Platzhalter, an denen die variablen Daten eingefügt werden. Die Markierung tritt vorzugsweise bei der Ausgabe der Daten im Druckgerät nicht mehr in Erscheinung.

Die erfindungsgemäße Trennung zwischen variablen Daten und statischen Daten kann bereits im Quellformat der Applikation (z.B. direkt im Editor) erfolgen oder in einem der Applikation nachgeschalteten Vorgang, z.B. im Zuge der Umwandlung eines Windows-Dokuments in das EMF-Format oder innnerhalb des EMF-Formats. Die Trennung kann insbesondere in einer zur EMF-Umwandlung nachgeschalteteten Filterung erfolgen und insbesondere bei der Umsetzung des Datenstroms in eine Drucksprache wie PCL oder Postscript. Durch die Erfindung wird ein intelligenter Druckertreiber möglich, mit dem umfangreiche Druckdatenströme mit hoher Geschwindigkeit an ein Druckgerät übertragbar sind.

Gemäß dem ersten Aspekt der Erfindung erfolgt insbesondere eine Begrenzung der statischen Daten, d.h. eine Angabe darüber, welchen Umfang die statischen Daten einnehmen. Durch diese Begrenzung kann im nachgeschaltenen Filtervorgang eine dokument- und ortsgenaue Zuordnung (Referenzierung mit entsprechenden Referenzierungsdaten) der variablen Daten zu den statischen Daten auf einfache Weise erfolgen.

Gemäß einem zweiten Aspekt der Erfindung wird ein Zusatzdokument, beispielsweise ein oder mehrere PCL-Makros wahlfrei einem oder mehreren beliebigen Bereichen (Seiten) eines bestehenden, aber beliebigen Dokuments zu Beginn der Ausgabe, insbesondere eines Ausdrucks, hinzugefügt. Insbesondere bei Seriendokumenten reicht es dabei aus, die Zuordnung nur einmalig für ein Masterdokument zu treffen.

Die Zuordnung kann dann für alle Einzeldokumente gelten, d.h. aktiviert werden. Die Zuordnung erfolgt durch eine logische Verbindung der beiden Dokumente, insbesondere durch eine Referenzierung, bei der entsprechende Referenzierungsdaten gebildet werden. Dabei können vorzugsweise zusätzliche Parameter angegeben werden, beispielsweise die Position des zweiten Dokuments innerhalb des ersten Dokuments. Das zweite Dokument zeichnet sich insbesondere dadurch aus, daß es einen vorgegebenen, nicht variablen Dateninhalt (z.B. grafische Bereiche oder nicht-variable Textbestandteile) hat. Innerhalb einer typischen Windows®-Systemumgebung wird die Referenzierung dabei insbesondere über Daten gesteuert, die über eine Benutzerschnittstelle eingegeben werden. Die Referenzierung erfolgt dann innerhalb einer Umsetzeinheit, die einen windows-spezifischen Enhanced Metafile- Datenstrom (EMF-Datenstrom) in einen Druckdatenstrom wie z.B. PCL® oder Postcsript® umsetzt.

In vorteilhaften Ausführungsformen des zweiten Aspekts der Erfindung wird der Seitenbereich des Masterdokuments angegeben, in dem das zweite Dokument mit dem Masterdokument verbunden wird. Die Einbindung des zweiten Dokuments kann in verschiedenen Modi erfolgen, beispielsweise als Overlay oder als Wasserzeichen.

Gepackte, ein- und dieselben statische Daten mehrfach enthaltende Dateien treten nicht nur bei bei PCL- und Postscript-Druckdatenströmen auf, sondern mitunter auch bei AFPDS-, IPDS- und auch bei LCDS-Datenstömen. Desweiteren können in Dokumente/Datenstöme, die in einer ersten Drukkersprache (z.B. in Postscript) erzeugt werden, auch Daten (Dokumente, Makro-Dateien), die in anderen Sprachen erzeugt worden sind (z.B. IPDS-Overlays, IPDS-Pagesegmente oder PCL-Makros), eingebunden werden. Die Erfindung ist deshalb zur optimalen Ausgabe jeglicher Datenströme geeignet.

Als Ausgabegerät wird für die Erfindung insbesondere ein Druckgerät verstanden. Gleichwohl kann die Erfindung auch in Verbindung mit anderen Ausgabeeinrichtungen alleine oder in Kombination mit einem Druckgerät verwendet werden. Bei-spielsweise kann als Ausgabegerät auch ein Druck-Server, eine CD-ROM-Schreibeinrichtung oder ein Druckdatenarchiv dienen, wie es in der PCT-Patentanmeldung PCT/EP98/05460 beschrieben ist. Der Inhalt dieser Anmeldung bzw. der daraus resultierenden Veröffentlichungen wird hiermit durch Bezugnahme in die vorliegende Beschreibung aufgenommen.

Nachfolgend werden Ausführungsbeispiele der Erfindung anhand einiger Figuren näher erläutert.

Es zeigen:
- Fig. 1:: ein Drucksystem
- Fig. 2:: einen Datenstrom im Drucksystem
- Fig. 3:: eine Auswahlmaske
- Fig. 4:: eine zweite Auswahlmaske
- Fig. 5:: ein Seriendokument
- Fig. 6:: einen zweiten Datenstrom
- Fig. 7:: eine weitere Auswahlmaske
- Fig. 8:: eine Standard-Windows-Systemumgebung und
- Fig. 9:: eine modifizierte Windows-Systemumgebung.

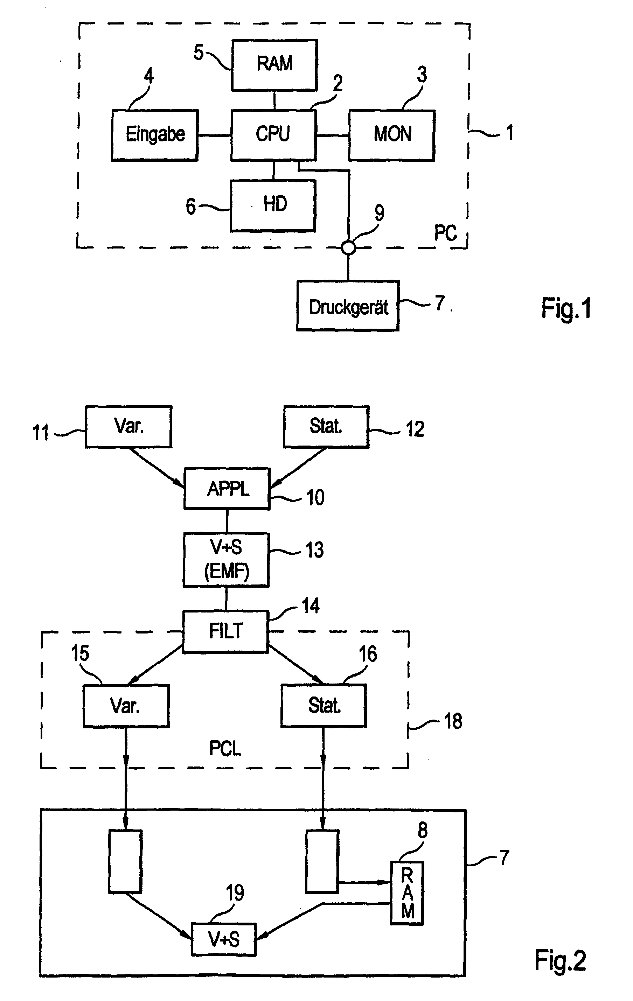

In Figur 1 ist ein Personal Computer 1 mit einem angeschlossenen Drucker 7 dargestellt. Der Personal Computer 1 enthält in an sich bekannter Weise eine zentrale Recheneinheit (CPU) 2, einen damit verbundenen Monitor 3 sowie eine Eingabeinrichtung 4 (Tastatur, Maus, Touch Screen oder dergleichen), einen Arbeitsspeicher 5 und eine Festplatte 6. Der Computer 1 ist mit dem Drucker 7 über die Schnittstelle 9 verbunden. Der Personal Computer 1 wird mit einem Betriebssystem betrieben, beispielsweise mit Microsoft Windows 95® oder Windows NT. Unter diesem Betriebssystem laufen wiederum verschiedene Anwender-Programme, beispielsweise aus dem Microsoft Office 97® - Paket, die Anwendung (Applikation) 10 Winword 97®. Am Beispiel der Figur 2 wird erläutert, wie variable und statische Daten eines Serienbriefs aus der Winword-Anwendung gedruckt werden. In die Applikation werden dabei variable Daten 11 und statische Daten 12, die in dem Arbeitsspeicher 5 und/oder auf der Festplatte 6 gespeichert sind, eingebunden. Der Benutzer kann hierzu im Winword Programm 10 ein Master-Dokument erstellen, in dem statische Datenbereiche und variable Datenbereiche vorgesehen sind. Die variable Datenbereiche sind dazu bestimmt, mit variablen Daten, die in einer separaten Datei (Word-Dokument, Datenbank, Excel-Dokument usw.) gespeichert sind, aufgefüllt zu werden. Näheres zu dieser Serienbrief-Erstellung ist beispielsweise in dem Buch "Rainer-Walter Schwabe; Word 97: leicht, klar, sofort; Markt- und Technik-Verlag; Haar (1997); ISBN 3-8272-5267-3" auf den Seiten 75 bis 93, beschrieben. Diese Beschreibung wird hiermit durch Bezugnahme in die vorliegende Beschreibung aufgenommen.

In den variablen Datenbereichen des Winword-Masterdokuments werden dabei Platzhalter für die variablen Daten geschaffen, beispielsweise durch die Angabe «Name». Bei Aufruf des Serienbriefs wird in diesen Platzhalter dann das variable Datum satzweise aus dem Feld "Name" der Datei entnommen, die die variablen Daten enthält.

Um dem Serienbrief, d.h. die einzelnen Dokumente mit dem jeweils eingesetzten, variablen Daten auszudrucken, werden nun die Platzhalter für die variablen Daten, z.B. <<Name>>, durch eine geeignete Markierung von den statischen Daten des Master-Dokuments unterschieden. Dies geschieht beispielsweise durch Formatierung der Platzhalter in einer bestimmten Farbe. Die Farbe sollte dabei so gewählt werden, daß der Drucker nicht in der Lage ist, Daten in dieser Farbe auszudrucken. Es wird also eine Farbe verwendet, die außerhalb des wiedergebbaren Farbspektrums des Drukkers liegt. Durch diese Art der Markierung kann sichergestellt werden, daß das visuelle Erscheinungsbild des auf dem Drucker 7 ausgegebenen Dokuments nicht von der Markierung betroffen ist. Das Markieren kann in an sich bekannter Weise innerhalb der Applikation 10 erfolgen, im vorliegenden Beispiel also durch den Befehl "Format|Zeichen" der Anwendung Word für Windows.

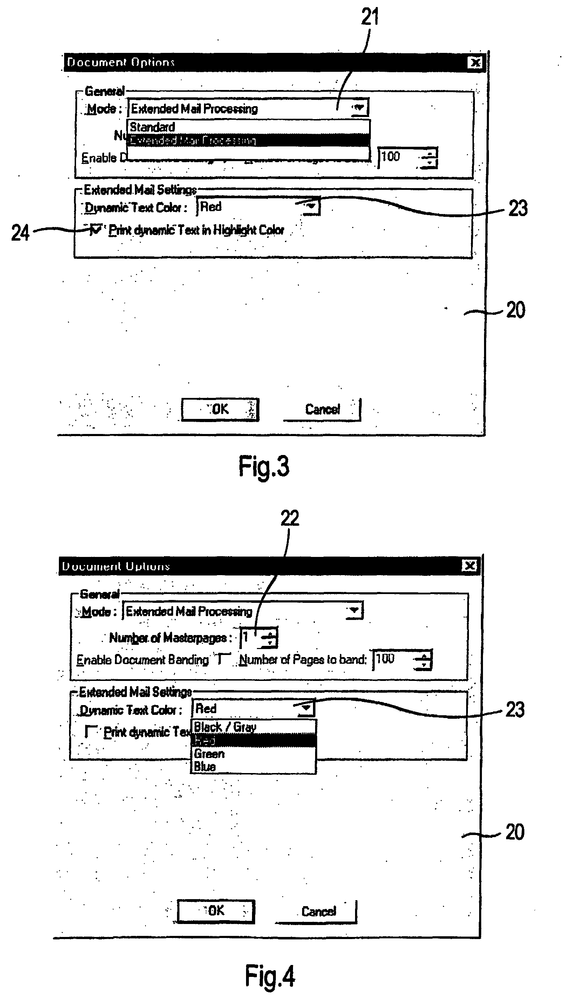

Bevor ein Dokument aus der Applikation ausgedruckt wird, sind noch zwei Angaben zu erstellen, die den weiteren Ausdruck steuern. Zum einen ist anzugeben, welche Eigenschaften die Markierung der Platzhalter für variable Daten hat. Im vorliegenden Beispiel ist dies die Markierung der Platzhalter durch die Farbe Rot (siehe auch Figur 4). Zum anderen ist anzugeben, welchen Umfang das Masterdokument hat. Mit dieser Angabe können im späteren Filtervorgang die Einzeldokumente des Serienbriefs voneinander unterschieden bzw. getrennt werden.

Zum Ausdrucken des Serienbriefs werden in der Applikation 10 die Platzhalter in den variablen Datenbereichen des Master-Dokuments satzweise durch die entsprechenden variablen Daten 11 des variablen Datenspeichers ersetzt und ein Datenstrom bzw. eine Datei des gesamten Dokuments, d.h. der statischen und der variablen Daten, im Enhanced Metafile Format (EMF) 13 erzeugt. Bei diesem EMF-Spooling, das bei Ausgabe des Serienbriefs über einen Windows-Druckertreiber durchgeführt wird, wird jedes Einzeldokument des Serienbriefs bzw. Seriendokuments aus dem Master-Dokument jeweils neu aufgebaut. Um eine redundante Datenwiederholung der statischen Daten zu vermeiden, wird in dem Filtervorgang 14 aus dem Serienbrief-Datenstrom jeweils der statische Anteil 16 und der variable Anteil 15 der Einzeldokumente voneinander getrennt. Die variablen Daten werden dabei an ihrer Markierung erkannt, die zuvor wie oben beschrieben vorgenommen wurde. Zusätzlich zu dieser Markierungsinformation ist bei dem Filtervorgang auch der Umfang des Master-Dokuments, das z.B. die Anzahl der von ihm eingenommen Seiten nötig. Hierdurch können die Einzeldokumente im Filtervorgang voneinander unterschieden werden.

Im Filtervorgang 14 werden anhand der Markierung der variablen Daten und anhand der angegebenen Begrenzung (Seitenzahl des Master-Dokuments) die statischen von den variablen Daten getrennt. Die statischen Daten werden an das Druckgerät 7 übertragen und dort im Arbeitsspeicher 8 als Formular oder Makro gespeichert. im Arbeitsspeicher 8 als Formular oder Makro gespeichert. Die Kapazität des Arbeitsspeichers ist dabei derart groß ausgebildet, daß gleichzeitig mehrere Dokumente (Makros, Formulare) sowie deren zugehörige Referenzierungsdaten abgespeichert werden können. Der Arbeitsspeicher kann als RAM (Random Access Memory) typischerweise z.B. 4, 8 64, 128 , 512 oder sogar mehr Megabyte (MB) betragen oder als auch Festplatte (hard disk) mit dafür typischen Speicherkapazitäten einiger Gigabyte ausgebildet sein. Auch eine Kombination zwischen beiden Speicherarten (RAM, hard disk) kann sinnvoll sein, wobei dann häufiger aufgerufene Dokumente (Makros etc.) eines Druckauftrags (jobs) im RAM und weniger häufig aufgerufene Dokumente, z.B. nur einmalig aufgerufene Dokumente (Makros) des Druckauftrags, auf der hard disk abgesepeichert werden.

Die variablen Daten werden dagegen zusammen mit allen notwendigen Charakteristika (z.B. Positionsangaben auf dem Einzeldokument, Farbangaben, Fontangaben) gesondert ebenfalls an das Druckgerät 7 übertragen. Die Übertragung der variablen Daten und der statischen Daten vom Computersystem 1 an das Druckgerät 7 kann über dieselbe Datenleitung erfolgen, wobei jedoch eine logische Unterscheidung (Trennbarkeit) der Daten beibehalten werden muß.

Ab dem zweiten Einzeldokument werden dann nur noch die gefilterten, variablen Daten an das Druckgerät 7 übertragen, wodurch eine erhebliche Reduktion des Datenstroms zwischen Computersystem 1 und Druckgerät 7 erreicht wird.

Innerhalb des Druckgeräts 7 werden die empfangenen variablen Daten mit den statischen Daten wieder gemischt und gemeinsam auf einen Aufzeichnungsträger (Papier, Etiketten, Folien usw.) umgedruckt.

Im zweiten und in allen weiteren Einzeldokumenten werden die statischen Daten 16 im Computer 1 bzw. innerhalb des PCL-Konverters 18 verworfen und nicht an das Druckgerät 7 übertragen. Die variablen Daten 15 werden dagegen zusammen mit ihren charakteristischen Angaben einzeldokumentweise an das Druckgerät 7 übertragen. Im Druckgerät 7 werden diese variablen Daten 15 dann mit den im Speicher 8 gespeicherten statischen Daten durch eine ODER-Operation zusammengeführt.

Der Filtervorgang 14 ist der Konvertierung der Daten in einen PCL-Datenstrom vorgeschaltet. Er findet aber innerhalb des PCL-Konverters 18 statt.

Statt eines PCL-Konverters kann auch ein Postscript-Konverter oder ein beliebiger anderer, in der jeweiligen Systemumgebung üblicher Konverter verwendet werden. Der Filtervorgang 14 kann auch direkt auf die EMF-Zwischendatei bzw. den EMF-Zwischendatenstrom 13 angewandt werden oder auf den Quelltext des Editors (z.B. im Word). In dem PCL-Konverter gehen dann bereits die gefilterten, variablen Daten 15 bzw. statischen Daten 16 ein.

In Figur 3 ist ein Auswahlfenster gezeigt, das ausgewählt wird, bevor aus der Applikation 10 der Druckvorgang in die EMF-Zwischendatei (Vorgang 13) erfolgt. Das Eingabefenster 20 enthält ein erstes Auswahlfenster 21, in dem zwei Druckmodi auswählbar sind. Im ersten Druckmodus (Standard) werden Druckdaten aus der Windows-Applikation standardmäßig ausgedruckt, d.h. die Filterprozedur (Vorgang 14) findet nicht statt. Serienbriefe werden dann einzeldokumentweise an das Druckgerät 7 übertragen. Durch Auswahl der Option "extended mail processing" im Mode-Fenster 21 wird die oben beschriebene Filter-Prozedur (Vorgang 14) aktiviert.

Im Auswahlfenster 22 ist der Umfang des Master-Dokuments angebbar. Hierdurch wird im Filtervorgang die Trennung der Einzeldokumentseiten ermöglicht.

Im Auswahlfenster 23 wird die Farbeigenschaft angegeben, mit der die Platzhalter variabler Daten im Master-Dokument markiert wurden. Figur zeigt verschiedene Auswahlfelder (Black/Grey, Red, Green, Blue) für diese Markierungen.

Im Auswahlfenster 24 kann wahlweise angegeben werden, ob die dynamischen Texte im Druckgerät 7 andersartig, beispielsweise in einer hervorgehobenen Farbe (Highlight Color) gedruckt werden sollen. Dies setzt voraus, daß das Druckgerät in der Lage ist, zweifarbig zu drucken, wobei die Standardtexte in der ersten Farbe gedruckt werden und die dynamischen Texte in der zweiten Farbe. Die erste Farbe ist dabei z.B. Schwarz und die zweite Farbe Blau (Highlight Color) oder umgekehrt.

In einer weiteren Ausführungsform der Erfindung können die dynamischen Texte entweder in einer ersten, vom Drucker nicht darstellbaren Farbe markiert werden. Die so markierten variablen Daten werden in der selben Farbe wie die statischen Daten ausgedruckt. Andere variable Daten werden dagegen in einer zweiten Farbe markiert und in der zweiten Druckfarbe (Highlight Color) des Druckgeräts ausgedruckt. Somit ist die Möglichkeit geschaffen, auch bei dynamischen Daten unterschiedliche Ausgabefarben anzugeben.

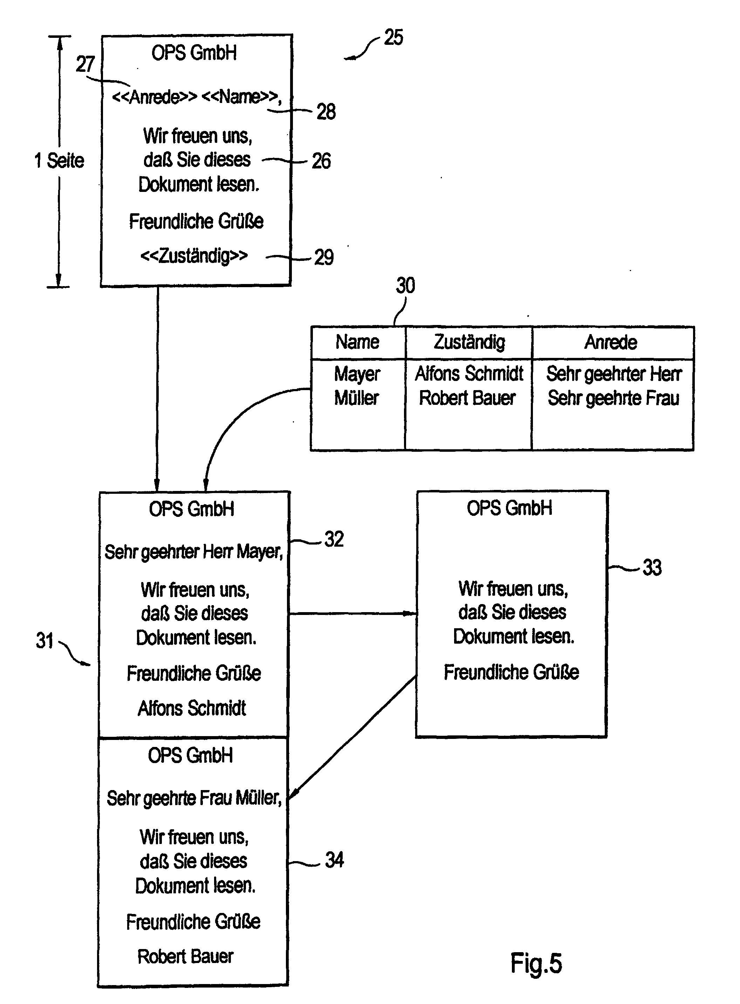

In Figur 5 ist ein Master-Dokument 25 gezeigt. Es besteht aus statischen Daten 26 und den drei variablen Platzhaltern 27, 28 und 29 (Anrede, Name, Zuständigkeit). Die Länge des Masterdokuments beträgt eine Seite. In der Datei 30 sind variable Daten in den Feldern Name, Zuständigkeit und Anrede gespeichert. Das Master-Dokument 25 und die variablen Daten 30 werden zum Seriendokument 31 kombiniert, wobei aus dem ersten Seriendokument 32 der statische Textteil 33 extrahiert wird, welcher den statischen Daten 16 (Fig. 2) entspricht. Diese Daten werden zur Erzeugung des zweiten Einzeldokuments 33 verwendet (vgl. Fig. 2).

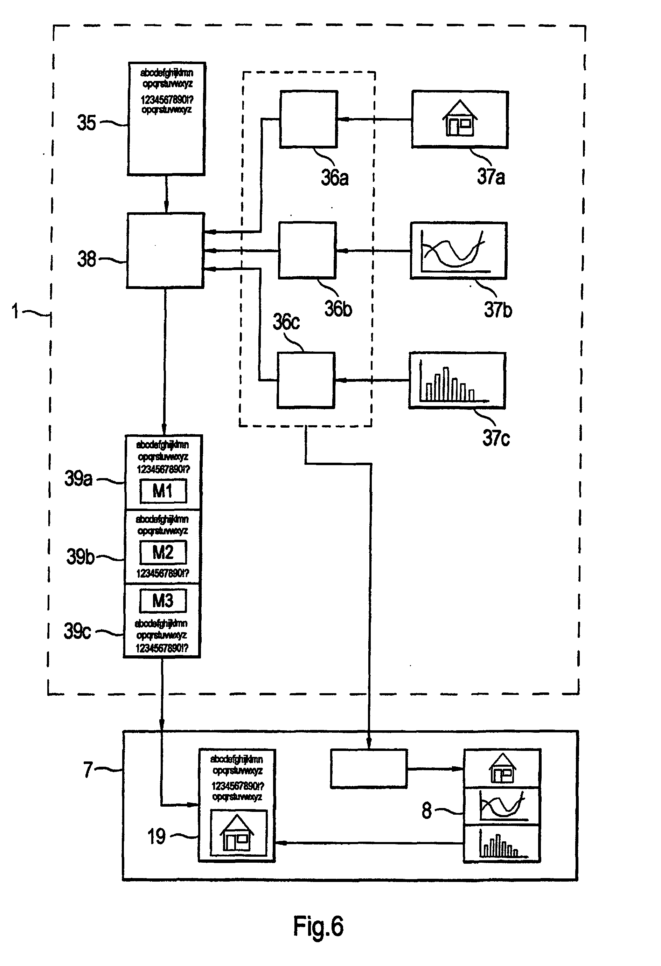

In Figur 6 ist gezeigt, wie eine Zusatzinformation in ein bestehendes Dokument eingebunden werden kann. Wie in den vorhergehenden Beispielen bzw. Figuren angegeben, sei auch hier die Applikation das Programm Winword. In das Winword-Dokument 35 wird ein Makro 36 eingebunden, welches eine externe Datenquelle 37 enthält. Das Makro 36a enthält beispielsweise eine Bilddatei 37a. Das Makro 36b enthält ein Liniendiagramm 37b und das Makro 37c enthält ein Balkendiagramm 37c. Im Vorgang 38 können die Makros 36a, 36b und 36c wahlweise entweder alleine oder mehrere zusammen ausgewählt werden zur Einbindung in das Winword Dokument 35. Weiterhin wird in diesen Vorgang angegeben, auf welchen Seiten und an welcher Position innerhalb der einzelnen Seiten des Winword Dokuments 35 das oder die jeweiligen Makros zu plazieren sind. Daraus wird ein Druckdatenstrom 39 erzeugt, bei dem die einzelnen Seiten 39a, 39b und 39c mit den jeweiligen Referenzindex-Makrodaten M1, M2, M3 versehen sind.

Diese Informationen (Referenzindexdaten M1, M2, M3 ) werden in die PCL-Sprache umgesetzt und an das Druckgerät 7 gesandt. Gleichzeitig werden die Makro-Informationen (insbes. grafische Daten) konvertiert (soweit sie nicht bereits im PCL-Format vorliegen) und getrennt von den Serienbriefinformationen , d.h. zeitlich und/oder datentechnisch getrennt von dem Seriendruckdatenstrom, in das Druckgerät 7 übertragen und dort im Arbeitsspeicher 8 abgelegt. Im Arbeitsdspeicher 8 werden dabei mehrere und insbesondere alle für den Druckauftrag benötigten, vollständigen Makro-Daten (Grafikinformationen etc.) abgespeichert. Innerhalb des Druckgeräts 7 werden die Serienbriefdaten (d.h. der Seriendruckdatenstrom) dann mit den entsprechenden, vollständigen Makrodaten unter Verwendung der Referenzindexdaten M1. M2, M3 wieder verbunden, d.h. die Seite 39a wird unter Verwendung des Referenzindex M1 mit dem Makro 36a (d.h. mit den vollständigen Druckdaten des Makros 36a), die Seite 39b wird unter Verwendung des Referenzindex M2 mit den vollständigen Daten des Makros 36b und die Seite 39c wird unter Verwendung des Referenzindex M3 mit den Daten des Makros 36c ausgegeben. In der Stufe 38 findet die Referenzierung, d.h. die logische Verbindung zwischen bestimmten Dokumentseiten (39a, 39b, 39c) mit den zugeordneten Makros 36a, 36b, 36c statt, indem die Referenzindices bzw. Referenzindexdaten M1, M2 und M3 gebildet werden.

Im Beispiel der Figur 6 umfaßt das Einzeldokument die drei Seiten 39a, 39b, 39c. Ist das Dokument 35 ein Seriendokument, so reicht es aus, die Zuordnung für ein Einzeldokument (Master-Dokument) zu treffen, damit diese Zuordnung für alle Einzeldokumente gilt. Die Einzeldokumente können dabei einzelne Seiten sein oder - wie in Fig. 6 gezeigt - mehrere Seiten umfassen. Der Vorteil dieser für die Makro-Einbindung beschriebenen Verfahrensweise ist wiederum, daß die wiederkehrenden Informationen, hier Makros, vom Computer 1 nur ein einziges Mal an das Druckgerät 7 übertragen werden müssen, und im Drucker aus dessen Arbeitsspeicher heraus beliebig oft mit Einzeldokumenten verknüpfbar sind. Auch hier ist die zu übertragende Datenmenge zwischen Computer 1 und Druckgerät 7 minimal, weil in den einzelnen Dokumenten Makros nicht vollständig, sondern nur noch durch Angabe ihres Referenzindex 2 (M1, M2, M3) übertragen werden.

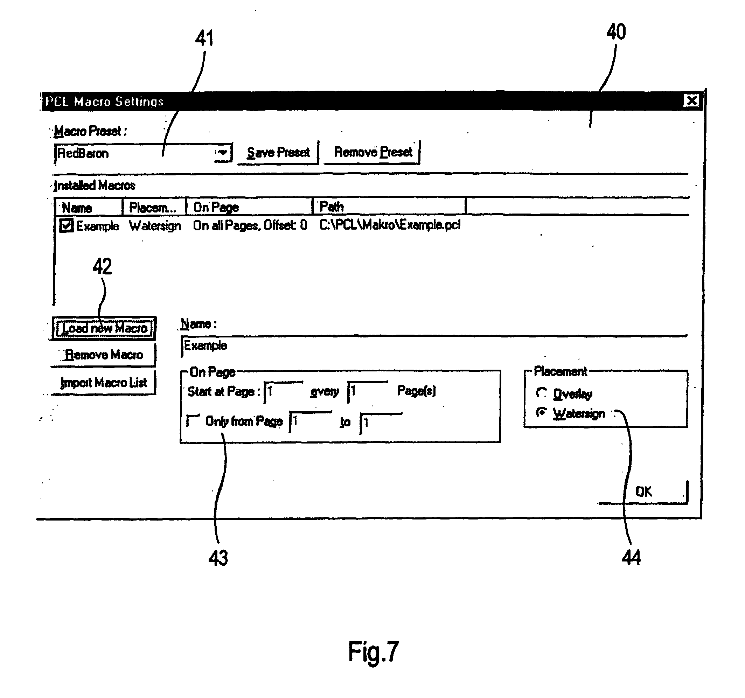

In Figur 7 ist ein Auswahlfenster dargestellt, welches in der Referenzierungsstufe 38 im Computer 1 aufgerufen wird. Im Fenster 41 können Voreinstellungen für Makros vorgenommen werden, d.h. standardisierte Makro-Sammlungen und/oder Einbindungen an bestimmte Dokumentseiten hinterlegt werden. Über die Auswahltaste 42 können zu einer Makro-Preset-Einstellung zusätzliche neue Makros ausgewählt werden. Im Auswahlfeld 43 kann die Position des Makros auf bestimmten Dokumentseiten festgelegt werden, beispielsweise auf allen Seiten, auf geraden oder ungeraden Seiten oder auf bestimmten Seitennummern. Mit dem Auswahlfeld 44 wird die Plazierungsart als Overlay (vollständige Überlagerung) oder Wasserzeichen (Makroinformationen nur im Hintergrund) innerhalb des Dokuments ausgewählt werden.

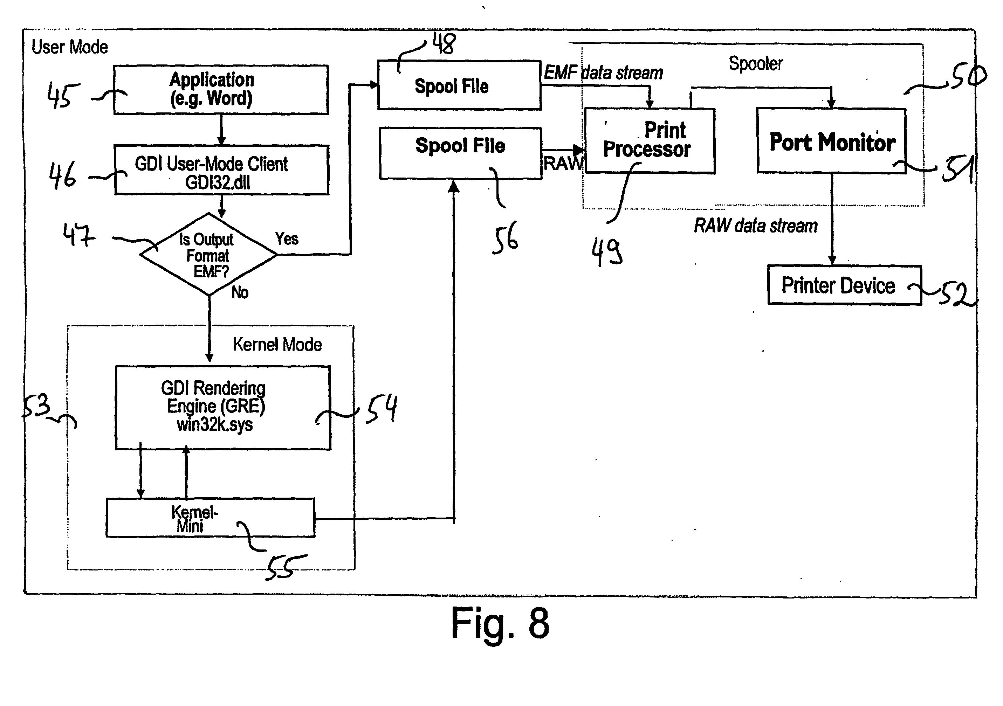

Figur 8 zeigt ein Strukturdiagramm, nach welchem ein Druckvorgang innerhalb eines auf einem Computer ablaufenden Windows®-Betriebssystems normalerweise abläuft. Aus einer Anwendung 45 heraus (z.B. aus dem Programm WORD) wird dabei ein sog. "User-Mode Client" (GDI32.dll) 46 aufgerufen, der die Anzeigevorrichtung (Graphic Device Interface, GDI) ansteuert. Dabei können verschiedene Drucker-Treiber aufgerufen und die von dem jeweiligen Treiber unterstützten Einstellungen des zugehörigen Druckers auftragsspezifisch eingestellt werden. Nachdem diese Einstellungen erfolgt sind und der Druckauftrag freigegeben wurde (Drucken "OK") wird unter Windows standardmäßig geprüft, ob das dabei erzeugte Ausgabeformat dem EMF-Standard (EMF steht für Enhanced Metafile Format) entspricht. Falls dies der Fall ist, wird der Druckdatenstrom über eine Spool-Datei 48 als EMF-Datenstrom einem im Spooler 50 befindlichen Druckprozessor 49 zugeführt. Von dort werden die Daten einem Port-Monitor 51 zugeführt und als sogenannter RAW- Datenstrom, d.h. als Datenstrom in einer dem Ziel-Druckgerät angepassten Druckersprache wie z.B. PCL dem Ziel-Druckgerät 52 zugeführt. Der Port-Monitor 51 steuert dabei die Ausgabe der Daten an den dem Ziel-Druckgerät 52 zugeordneten Ausgabekanal (LPT1, LPT2) des Computers.

Ergibt sich dagegen bei der Abfrage 47, daß das in der Anwendung 45 erzeugte Dokument nicht im EMF-Format vorliegt, so wird ein sog. Kernel Mode 53 aktiviert, in dem eine GDI Rendering Engine (GRE), d.h. das Programm-Element win32k.sys" 54 mit dem Kernel Mini-Steuerungsmodul 55 zusammenwirkt. Dabei wird ein RAW-Datenstrom erzeugt, der als RAW-Spool Datei 56 wiederum dem Print-Processor 49 im Spooler 50 zugeführt wird. Von dort erfolgt die Weitergabe über den Port-Monitor 51 zum Ausgabegerät 52 weiterhin als RAW-Datenstrom.

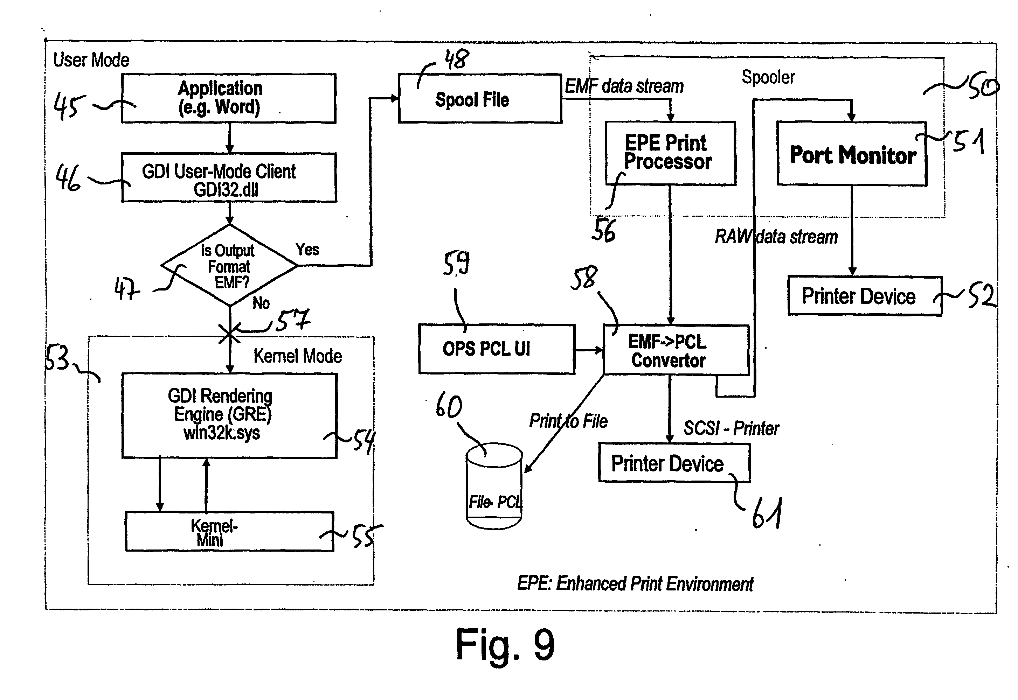

In Figur 9 wird deutlich, wie die im Zusammenhang mit Figuren 6 und 7 beschriebenen Aspekte der Erfindung innerhalb einer Windows-Umgebung implementiert sind. Durch die Erfindung wird in einer solchen Windows®-Systemumgebung die Referenzierung verschiedener Dokumente (Master-Dokument, Makro, Overlay) über Daten gesteuert, die über eine Benutzerschnittstelle bzw. über ein Eingabemodul 59 eingegeben werden. Die Referenzierung erfolgt innerhalb einer Umsetzeinheit 58, die einen windows-spezifischen Enhanced Metafile-Datenstrom (EMF-Datenstrom) in einen PCL-Druckdatenstrom (RAW-Datenstrom des Zieldruckers) umsetzt.

Aus der Anwendung 45 (z.B. Word) heraus erfolgt die Verarbeitung einer Datenausgabe (Drucken) gemäß Figur 9 zunächst genau wie in der Standard-Windows®-Umgebung gemäß Figur 8. Als Druckertreiber wird in Figur 9 jedoch ein erfindungsgemäß modifizierter Treiber verwendet, der einen Datenstrom im Format EMF erzeugt, wodurch unter Windows bzw. über die Abfrage 47 direkt ein Spool-File 48 erzeugt und das Spool-File einem erfindungsgemäss angepassten Print Prozessor 56 im Windows-Spooler 50 zugeführt wird. Der Kernel-Mode 43 bzw. die darin aufgerufenen Module GRE 54 und Kernel-Mini 55 werden von dem Treiber nicht unterstützt, was in Figur 9 durch das Kreuz 57 angedeutet ist.

Eine weitere erfindungsgemäße Anpassung liegt im Print-Processor 56 vor, der sich im Spooler 50 befindet. Dieser "Enhanced Print Environment (EPE) Print Processor" 56 gibt die EMF-Daten im Gegensatz zur Standard-Windows-Umgebung der Figur 8 nicht direkt an den Port Monitor 51 weiter, sondern ruft die Umsetzeinheit 58 auf, in welcher der EMF-Datenstrom in einen PCL-Druckdatenstrom umgesetzt wird. Die Umsetzung wird dabei durch die Parameter gesteuert, welche zuvor über das Eingabemodul 59 (OPS PCL User Interface) eingegeben wurden. Dazu bewirkt das Eingabemodul 59 unter anderem die Anzeige des in Figur 7 dargestellten Makro-Fensters 40. Weiterhin kann über Einstellungen, die entweder über das Eingabemodul 59 gesteuert werden oder auch direkt über den Druckertreiber, der mit dem GDI User-Mode Client 46 zusammenwirkt, die Ausgabe in verschiedene Kanäle erfolgen. Die Ausgabe dieser PCL-RAW-Druckdaten kann dabei entweder in eine Ausgabedatei 60 (Kanal1) , welche beispielsweise auf Festplatte gespeichert wird, oder direkt an einen SCSI-fähigen Drucker 61 (Kanal 2) oder wieder zurück in den Spooler 50 zum Port-Monitor 51 und von dort an über eine Standard-Schnittstelle (Kanal 3) zu einem Ziel-Druckgerät 52 erfolgen.

Es wurden Ausführungsbeispiele der Erfindung beschrieben. Dabei ist klar, daß statt dem beschriebenen Winword-Applikationsprogramm auch andere Applikationen, neben Textverarbeitungsprogrammen auch Präsentationsprogramme, Tabellenkalkulationsprogramme, Bildverarbeitungsprogramme oder andere, im Computerbereich übliche Programme die Erfindung wirkungsvoll nutzen können. Statt der beschriebenen Drukkersprache PCL können selbstverständlich auch andere Drukkersprachen Anwendung finden, z.B. Postscript, AFPDS, IPDS, PDF oder LCDS, insbesondere, wenn ein vollständig gepackter Datenstrom vorliegt, der nicht in Einzelkomponenten wie Schriften, Formulare etc. gegliedert ist.

Durch die Erfindung ist ein intelligenter Druckertreiber bzw. eine intelligente Vorstufe zum Drucken geschaffen, mit der der Datenstrom zwischen einem Anwender-Computer und einem Druckgerät wesentlich reduziert werden kann. Hierdurch ist ein höherer Dokumentendurchsatz bei der Ausgabe erreichbar. Die Erfindung ist sowohl in einem Einzelplatzsystem, bei dem ein Computer an einem Drucker angeschlossen ist, als auch in einem Netzwerksystem, bei dem mehrere Computer Druckdaten an einen oder mehrere Druckgeräte senden, anwendbar. Statt die Daten direkt an das Druckgerät zu übertragen, können sie vom Drucksystem, in dem die Daten erzeugt werden, über einen Druckserver an den Drucker gesandt werden. Ein solches System ist beispielsweise im "Druckerbuch, Dr. Gerd Goldmann (Hsg.), Océ Printing Systems GmbH, Poing, Ausgabe 3c (Mai 1998), ISBN 3-00-001019-X", auf den Seiten 12-1 bis 12-8 beschrieben. Diese Beschreibung sowie die entsprechende englischsprachige Beschreibung in "The World of Printers, Dr. Gerd Goldman (Ed.), Océ Printing Systems GmbH, Ed. 3a (Nov. 1998), ISBN 3-00-001081-5, Seiten 12-1 bis 12-8, werden hiermit ebenfalls durch Bezugnahme in die vorliegende Beschreibung aufgenommen.

Erfolgt die erfindungsgemäße Trennung zwischen variablen Daten und statischen Daten bereits im Quellformat der Applikation (z.B. direkt im Editor), so ist es möglich, die Ausgabe von Datenströmen weiter zu automatisieren bzw. zu beschleunigen, indem der statische Anteil getrennt vom variablen Anteil weiterverbeitet wird, beispielsweise durch Umsetzung des statischen Anteils in eine Makro-Datei (z.B. in PCL), Übertragen an das Ausgabegerät, dortiges Speichern und bedarfsweises Laden des Makros im Druckgenerator. Durch diesen weiteren Automatisierungsschritt kann die Filterung des Datenstroms entfallen.

Die Erfindung eignet sich insbesondere für den Einsatz in Windows-Systemen und in windows-ähnlichen Systemen wie Linux oder Macintosh-Betriebssystemen, die zumindest teilweise identische oder/oder ähnliche ähnliche Systemkomponenten wie Windows aufweisen.

Die Erfindung kann in verschiedenster Ausprägungen auftreten, beispielsweise als Computerdatei, als Programm-Modul, als Programmelement, als Programm-Bibliothek oder als Ansammlung von einer Vielzahl von Einzeldateien. Diese, insbesondere in Computerprogrammprodukten wie einem Speicherelement, einer Diskette, einem Plattenspeicher, einer CD-ROM, einem programmierbaren elektronischen Baustein (ROM, PROM, EPROM) enthaltene Ausprägung der Erfindung kann auch über Datennetze z.B. als Datei-Anhang einer email sowie über das Internet verbreitet werden.

### Bezugszeichenliste

- 1: Computer
- 2: CPU
- 3: Monitor
- 4: Tastatur
- 5: Arbeitsspeicher
- 6: Festplatte
- 7: Drucker
- 8: Drucker-Speicher
- 9: Schnittstelle
- 10: Winword®-Applikation
- 11: Variable Daten
- 12: Statische Daten
- 13: Enhanced Meta File
- 14: Filterung
- 15: Gefilterte, variable Daten
- 16: Gefilterte, statische Daten
- 17: Ausgedruckte Daten
- 18: PCL-Konverter
- 19: Bitmap-Speicher
- 20: Eingabe-Fenster für Druckausgabe
- 21: Mode-Auswahlfenster
- 22: Fenster zur Angabe des Umfangs des Master-Dokuments
- 23: Fenster zur Angabe der Markierungseigenschaft(Farbe)
- 24: Optimales Fenster zur Angabe der Druckausgabe-Farbe
- 25: Master-Dokument
- 26: statische Daten
- 27: Anrede-Platzhalter
- 28: Namens-Platzhalter
- 29: Zuständig-Platzhalter
- 30: Variable Daten
- 31: Serienbrief-Datenstrom
- 32: Erstes Serienbriefdokument
- 33: Statische Daten des ersten Serienbriefdokuments
- 34: Zweites Serienbriefdokument
- 35: Winword-Dokument
- 36: Makro
- 37: Externe Datei
- 38: Referenzierungs-Stufe
- 39: Referenzierter Seitenstrom
- 40: Makro-Fenster
- 41: Macro-Preset-Feld
- 42: Auswahlfeld
- 43: Makro-Positionsfeld
- 44: Platzierungs-Auswahlfeld
- 45: Anwenderprogramm
- 46: Benutzersteuerungsmodul
- 47: Abfrage
- 48: EMF Spool-Datei
- 49: Druckprozessor im Spooler
- 50: Spooler
- 51: Port Monitor
- 52: Druckgerät
- 53: Kernel Mode
- 54: GRE-Steuerungsmodul
- 55: Kernel Mini-Steuerungsmodul
- 56: Enhanced Print Environment Processor
- 57: Blockierung des Kernel Modes
- 58: Umsetzeinheit
- 59: Eingabemodul
- 60: Ausgabe-Datei
- 61: SCSI-Drucker

## Patentansprüche

1. Verfahren zur Ausgabe von Daten von einem Computersystem (1) an ein Ausgabegerät (7), bei dem
(a) ein Masterdokument (25) mit einem variablen Datenbereich (27, 28, 29) und mit einem statischen Datenbereich (12, 26) erzeugt wird,
(b) der variable Datenbereich (27, 28, 29) durch eine mittels eines Einstellfensters (23) auswählbare Markierung markiert wird,
(c) im Computersystem (1) in den variablen Datenbereich (27, 28, 29) variable Daten (11) eingesetzt werden , wodurch ein Seriendatenstrom (31) mit Einzeldokumenten (32, 34) entsteht, die jeweils sowohl variable Daten (11, 30) als auch statische Daten (12, 33) enthalten,
(d) im Computersystem (1) aus dem Seriendatenstrom (31) die variablen Daten (11, 30) anhand der Markierung von den statischen Daten (12, 33) getrennt werden,
(e) vom ersten Einzeldokument (32) die variablen Daten (11, 30) getrennt von den statischen Daten (12, 33) an das Ausgabegerät (7) übertragen werden,
(f) im Ausgabegerät (7) die statischen Daten (12, 33) des ersten Einzeldokuments (32) gespeichert werden,
(g) die statischen Daten (12, 33) der nachfolgenden Einzeldokumenten nicht an das Ausgabegerät (7) übertragen werden und
(h) im Ausgabegerät (7) die variablen Daten (11,30) einzeldokumentweise wieder mit den gespeicherten statischen Daten (12, 33) verbunden werden.

2. Verfahren nach Anspruch 1, wobei als Ausgabegerät (7) ein Druckgerät verwendet wird.

3. Verfahren nach Anspruch 1 oder 2, wobei die Markierung des variablen Datenbereichs (27, 28, 29) durch eine visuell wahrnehmbare Kennzeichnung, insbesondere farbig, erfolgt.

4. Verfahren nach den Ansprüchen 2 und 3, wobei die Markierung mit einer Farbe erfolgt, die außerhalb des druckbaren Farbspektrums des Druckgeräts (7) liegt.

5. Verfahren nach einem der vorhergehenden Ansprüche, wobei der Umfang des Masterdokuments (25) angegeben wird.

6. Verfahren nach einem der vorhergehenden Ansprüche, wobei mit den variablen Daten (11, 30) charakteristischen Daten, insbesondere Positionsdaten, Fontdaten und/oder Farbdaten, an das Ausgabegerät (7) übertragen werden.

7. Verfahren nach einem der vorhergehenden Ansprüche, wobei die statischen Daten (12, 32) in einer Makro-Datei abgespeichert werden.

8. Verfahren nach einem der vorhergehenden Ansprüche, wobei der Seriendatenstrom in einer der Druckersprachen PCL, Postscript oder LCDS erzeugt wird.

9. Verfahren nach einem der vorhergehenden Ansprüche, wobei das Masterdokument (35) oder das zweite Dokument (36) ein Dokument, insbesondere ein Overlay oder ein Pagesegment der Druckersprache IPDS ist.

10. Verfahren nach einem der Ansprüche 1 bis 9, wobei Masterdokument (35) oder das zweite Dokument (36) ein Dokument der Druckdatensprache LCDS ist.

11. Verfahren nach einem der vorhergehenden Ansprüche, wobei die Datenausgabe in einer Windows-Systemumgebung oder in einer windowsähnlichen Systemumgebung (Linux, Macintosh) über Daten gesteuert wird, die über eine Benutzerschnittstelle (40, 59) eingegeben werden.

12. Verfahren nach einem der vorhergehenden Ansprüche, bei dem
(a) das Masterdokument (35) erzeugt wird,
(b) mindestens ein zweites Dokument (36a, 36b, 36c) mit dem Masterdokument (35) logisch verbunden wird und
(c) die Daten des zweiten Dokuments (36a, 36b, 36c) getrennt von den Daten des Masterdokuments (35) an das Ausgabegerät (7) gesandt werden.

13. Verfahren nach Anspruch 12, wobei die Daten des zweiten Dokuments (36a, 36b, 36c) im Ausgabegerät (7) gespeichert werden.

14. Verfahren nach einem der Ansprüche 12 oder 13, wobei im Ausgabegerät (7) die Daten des Masterdokuments (35) mit den Daten des zweiten Dokuments (36a, 36b, 36c) verbunden werden zur Ausgabe eines Einzeldokuments.

15. Verfahren nach einem der Ansprüche 12 bis 14, wobei die logische Verbindung über eine Referenzierung erfolgt.

16. Verfahren nach einem der vorhergehenden Ansprüche 12 bis 15, wobei der Bereich des Masterdokuments (35), insbesondere der Seitenbereich, angebbar ist, in dem das zweite Dokument (36) mit dem Masterdokument (35) zu verbinden ist.

17. Verfahren nach einem der Ansprüche 12 bis 16, wobei angegeben wird, ob das zweite Dokument ein Overlay oder ein Wasserzeichendokument ist.

18. Computerprogrammprodukt mit Elementen zum Durchführen des Verfahrens nach einem der vorhergehenden Ansprüche.

19. System zum Durchführen eines Verfahrens nach einem der vorhergehenden Ansprüche, das mindestens einen Computer umfasst.

## Claims

1. Method for the output of data from a computer system (1) to an output device (7), wherein
(a) a master document (25) having a variable data area (27, 28, 29) and having a static data area (12, 26) is generated,
(b) the variable data area (27, 28, 29) is marked by a marking selectable by means of a selection window (23),
(c) variable data (11) are inserted into the variable data area (27, 28, 29) in the computer system (1), as a result whereof a serial data stream (31) with individual documents (32, 34) arises, said individual documents respectively containing both variable data (11, 30) as well as static data (12, 33),
(d) from the serial data stream (31), the variable data (11, 30) are separated from the static data (12, 33) on the basis of the marking in the computer system (1),
(e) with regard to the first individual document (32), the variable data (11, 30) are transmitted to the output device (7) separately from the static data (12, 33),
(f) the static data (12, 33) of the first individual document (32) are stored in the output device (7), and
(g) the static data (12, 33) of the following individual documents are not transmitted to the output device (7), and
(h) the variable data (11, 30) are in turn joined with the stored, static data (12, 33) individual document by individual document in the output device (7).

2. Method according to claim 1, wherein a printer device is employed as output device (7).

3. Method according to claim 1 or 2, wherein the marking of the variable data area (27, 28, 29) takes place by means of a visually perceptible identification, particularly chromatically.

4. Method according to claims 2 and 3, wherein the marking takes place with a colour that lies outside the printable colour spectrum of the printer device (7).

5. Method according to one of the preceding claims, wherein the scope of the master document (25) is indicated.

6. Method according to one of the preceding claims, wherein characteristic data, particularly position data, font data and/or colour data, are transmitted to the output device (7) with the variable data (11, 30).

7. Method according to one of the preceding claims, wherein the static data (12, 32) are stored in a macro data file.

8. Method according to one of the preceding claims, wherein the serial data stream is generated in one of the printer languages PCL, PostScript or LCDS.

9. Method according to one of the preceding claims, wherein the master document (35) or the second document (36) is a document, particularly an overlay or a page segment, of the printer language IPDS.

10. Method according to one of the claims 1 to 9, wherein the master document (35) or the second document (36) is a document of the print data language LCDS.

11. Method according to one of the preceding claims, wherein the data output in a Windows system environment or in a windows-like system environment (Linux, Macintosh) is controlled via data that are input via a user interface (40, 59).

12. Method according to one of the preceding claims, wherein
(a) the master document (35) is generated,
(b) at least one second document (36a, 36b, 36c) is logically linked with the master document (35), and
(c) the data of the second document (36a, 36b, 36c) are sent to the output device (7) separately from the data of the master document (35).

13. Method according to claim 12, wherein the data of the second document (36a, 36b, 36c) are stored in the output device (7).

14. Method according to one of the claims 12 or 13, wherein the data of the master document (35) are joined with the data of the second document (36a, 36b, 36c) for the output of an individual document.

15. Method according to one of the claims 12 to 14, wherein the logical linking takes place via a referencing.

16. Method according to one of the preceding claims 12 to 15, wherein the region of the master document (35), particularly the page region, in which the second document (36) is to be linked with the master document (35), can be specified.

17. Method according to one of the claims 12 to 16, wherein it is indicated whether the second document is an overlay or a watermark document.

18. Computer program product comprising elements for the implementation of the method according to one of the preceding claims.

19. System for the implementation of a method according to one of the preceding claims 1 to 17, which system comprises at least one computer.

## Revendications

1. Procédé d'édition de données d'un système informatique (1) sur un appareil d'édition (7), dans lequel :
(a) il est généré un document maître (25) comportant une zone de données variables (27, 28, 29) et une zone de données statiques (12, 26),
(b) la zone de données variables (27, 28, 29) est marquée par un repère sélectionnable au moyen d'une fenêtre de réglage (23),
(c) dans le système informatique (1), des données variables (11) sont insérées dans la zone de données variables (27, 28, 29) de sorte qu'il est généré un flux de données série (31) avec des documents individuels (32, 34) qui contiennent chacun aussi bien des données variables (11, 30) que des données statiques (12, 33),
(d) dans le système informatique (1), les données variables (11, 30) du flux de données série (31) sont séparées des données statiques (12, 33) par référence au repère,
(e) les données variables (11, 30) sont transférées du premier document individuel (32) à l'appareil d'édition (7) séparément des données statiques (12, 33),
(f) les données statiques (12, 33) du premier document individuel (32) sont mémorisées dans l'appareil d'édition (7),
(g) les données statiques (12, 33) des documents individuels suivants ne sont pas transférées à l'appareil d'édition (7), et
(h) les données variables (11, 30) sont de nouveau liées dans l'appareil d'édition (7) aux données statiques mémorisées (12, 33) en fonction des documents individuels.

2. Procédé selon la revendication 1, dans lequel un appareil d'impression est utilisé comme appareil d'édition (7).

3. Procédé selon la revendication 1 ou 2, dans lequel le repère de la zone de données variables (27, 28, 29) est effectué par une caractéristique sélectionnable visuellement, en particulier une couleur.

4. Procédé selon les revendications 2 et 3, dans lequel le repère est effectué par une couleur qui se trouve à l'extérieur du spectre de couleurs imprimable de l'appareil d'impression (7).

5. Procédé selon l'une des revendications précédentes, dans lequel la dimension du document maître (25) est indiquée.

6. Procédé selon l'une des revendications précédentes, dans lequel des données caractéristiques, en particulier des données de position, des données de fonte et des données de couleur, sont transférées avec les données variables (11, 30) à l'appareil d'édition (7).

7. Procédé selon l'une des revendications précédentes, dans lequel les données statiques (12, 32) sont mémorisées dans un macro-fichier.

8. Procédé selon l'une des revendications précédentes, dans lequel le flux de données série est généré dans l'un des protocoles d'imprimante PCL, Postscript ou LCDS.

9. Procédé selon l'une des revendications précédentes, dans lequel le document maître (35) ou le deuxième document (36) est un document, en particulier un Overlay ou un segment de page du protocole d'imprimante IPDS.

10. Procédé selon l'une des revendications 1 à 9, dans lequel le document maître (35) ou le deuxième document (36) est un document du protocole de données d'impression LCDS.

11. Procédé selon l'une des revendications précédentes, dans lequel l'édition de données dans un environnement Windows ou dans un environnement de type à fenêtre (Linux, Macintosh) est commandée via des données qui sont introduites via une interface utilisateur (40, 59).

12. Procédé selon l'une des revendications précédentes, dans lequel :
(a) il est généré le document maître (35),
(b) au moins un deuxième document (36a, 36b, 36c) est lié logiquement au document maître (35), et
(c) les données du deuxième document (36a, 36b, 36c) sont envoyées à l'appareil d'édition (7) séparément des données du document maître (35).

13. Procédé selon la revendication 12, clans lequel les données du deuxième document (36a, 36b, 36c) sont mémorisées dans l'appareil d'édition (7).

14. Procédé selon l'une des revendications 12 ou 13, dans lequel les données du document maître (35) sont liées dans l'appareil d'édition (7) aux données du deuxième document (36a, 36b, 36c) en vue d'éditer un document individuel.

15. Procédé selon l'une des revendications 12 à 14, dans lequel la liaison logique est effectuée via une référence.

16. Procédé selon l'une des revendications précédentes 12 à 15, dans lequel il peut être indiqué la zone du document maître (35), en particulier la zone de page, dans laquelle le deuxième document (36) est à lier au document maître (35).

17. Procédé selon l'une des revendications 12 à 16, dans lequel il est indiqué si le deuxième document est un Overlay ou un document en filigrane.

18. Programme informatique comportant des éléments destinés à mettre en oeuvre le procédé selon l'une des revendications précédentes.

19. Système destiné à mettre en oeuvre un procédé selon l'une des revendications 1 à 17, lequel système comporte au moins un ordinateur.
